# DEMANDE DE BREVET EUROPEEN

(11) **EP 0 652 347 A2**
(43) Date de publication de la demande: **10.05.1995**
(21) Numéro de dépôt: 94490053.9
(22) Date de dépôt: 04.11.1994
(51) Int. Cl.: E06B 3/62, E06B 7/23

(54) **Joint d'étanchéité pour profilé extrudé et procédé garni d'un tel joint**

(30) Priorité: 05.11.1993 FR 9313482
(71) Demandeur: PROFEX S.A., F-62210 Avion (FR)
(72) Inventeur: Wybo, Carlos, B-8720 Oeselgem (BE)
(74) Mandataire: Hennion, Jean-Claude

(57) **Abrégé**

Le Joint d'étanchéité pour profilé extrudé, est en thermoplastique élastomère et du type tubulaire ; il a une forme oblongue avec une face arrière (12) semi-rigide sensiblement plane, et de préférence bombée dans sa zone centrale (13), supportant un décrochement (15) de fixation. La partie plane 16 de sa face avant (14) raccordée à la face arrière (12) par des flancs inclinés avant (17) et arrière (18) reliés par des bords arrondis (27) . L'angle (β) entre les flancs inclinés (17, 18) est de l'ordre de ou légèrement inférieur à 90°.

Le Profilé en polychlorure de vinyle ou en résine de synthèse pour cadre dormant de menuiserie qui comporte au moins un joint ayant les caractéristiques précitées est apte à recevoir indifféremment un vitrage fixe ou un cadre ouvrant.

## Description

La présente invention concerne le domaine des profilés extrudés à partir de polychlorure de vinyle ou de résine de synthèse et destinés à entrer dans la réalisation de pièces de menuiserie, que lesdits profilés soient revêtus ou non de capotage en aluminium, bois ou matières plastiques. Elle concerne plus particulièrement un joint d'étanchéité spécialement adapté pour être monté de manière automatique sur le profilé à l'occasion de l'opération d'extrusion, étant apte à servir indifféremment de joint de vitrage ou de joint de frappe. Elle concerne également un profilé extrudé équipé d'un tel joint.

S'agissant des fenêtres réalisées à partir de profilés en polychlorure de vinyle ou résine de synthèse, I'étanchéité est généralement assurée entre le cadre dormant et le cadre ouvrant par des joints qui sont fixés dans des rainures prévues longitudinalement dans les profilés. L'étanchéité au niveau du vitrage est réalisée également par une autre série de joints qui est interposée entre le vitrage et le cadre, qu'il s'agisse d'un cadre dormant ou ouvrant selon que cette pièce de menuiserie est fixe ou non, ledit joint étant monté avant la mise en place du vitrage.

Pour certaines pièces de menuiserie comportant une traverse intermédiaire, il est possible de trouver de la même manière des joints interposés; il s'agit par exemple d'un vitrage ou d'un panneau plein en partie inférieure, d'un cadre ouvrant ou d'un vitrage fixe en partie supérieure.

Les joints d'étanchéité actuellement utilisés sont en caoutchouc synthétique du type éthylène propylène ils sont toujours montés manuellement sur le cadre terminé après assemblage des profilés par soudure thermoplastique. Cette opération manuelle nécessite des temps de pose relativement importants.

Pour remédier à cet inconvénient, on pourrait envisager de mettre en oeuvre des joints en les montant directement sur les profilés, en sortie d'extrusion de ceux-ci, lesdits joints étant coupés et soudés en même temps que le profilé lors de l'assemblage destiné à réaliser le cadre. Cependant cette technique ne pourrait s'appliquer que lorsque le joint consiste en un joint de vitrage qui doit être monté sur un profilé utilisé comme cadre ouvrant.

En effet il s'avère que la géométrie et les caractéristiques des joints normalement utilisés n'est pas identique selon qu'il s'agit d'un joint de vitrage ou d'un joint de frappe. On désigne par joint de vitrage le joint d'étanchéité qui est destiné à s'appliquer entre un cadre et le vitrage et dont la compression est donc assurée une fois pour toute lors de la mise en place du vitrage. Il a généralement la forme d'une ou plusieurs languettes. On désigne sous l'appellation joint de frappe un joint d'étanchéité qui est destiné à s'interposer entre un cadre dormant et un cadre ouvrant, qu'il soit positionné sur l'un ou l'autre de ceux-ci.

Ainsi les besoins en joint d'un cadre dormant sont différents selon que celui-ci doit recevoir un vitrage fixe ou un cadre ouvrant. Ces besoins ne peuvent être déterminés qu'à la fabrication des pièces de menuiserie et non pas à l'extrusion des profilés. Pourtant c'est le même profilé qui va constituer le cadre dormant. Il est donc actuellement impossible de stocker des profilés pour cadre dormant qui soient équipés de leur joint.

On a partiellement remédié à l'inconvénient précité grâce à une technique d'étanchéification qui consiste à co-extruder à chaud sur le bord des profilés, des lèvres en polychlorure de vinyle souples faisant office de joint. Cette nouvelle technique s'applique sur les profilés destinés à constituer des cadres ouvrants elle ne s'applique jamais sur les profilés destinés à former des cadres dormants pour les mêmes raisons que celles invoquées ci-dessus.

Le but que s'est fixé le demandeur est de proposer un joint d'étanchéité qui pallie l'inconvénient précité du fait qu'il peut être utilisé à la fois en joint de frappe et en joint de vitrage, et qu'il est apte à être monté sur tout profilé destiné à constituer des cadres dormants ou des cadres ouvrants, dès l'opération d'extrusion desdits profilés.

Il s'agit d'un joint d'étanchéité en thermoplastique élastomère pour profilé extrudé, notamment en polychlorure de vinyle ou en résine de synthèse, qui comporte un décrochement permettant sa fixation dans une rainure pratiquée dans ledit profilé ledit joint est du type tubulaire, il a une forme oblongue avec une face arrière sensiblement plane supportant le décrochement de fixation et une face avant qui comporte une partie plane parallèle à la face arrière, sur au moins le quart de sa largeur. De manière caractéristique selon l'invention, la partie plane de la face avant est raccordée à la face arrière par des flancs inclinés avant et des flancs inclinés arrière reliés par des bords arrondis ; de plus la face arrière est semi-rigide. L'ensemble des éléments caractéristiques précités permet d'obtenir le résultat escompté. Le fait que la face arrière soit semi-rigide permet de réaliser son alimentation et son placement dans la rainure du profilé en sortie d'extrusion de celui-ci sans risque d'obtenir un quelconque retrait du joint après sa pose et sa coupe dans le cas où la tension d'alimentation provoquerait un certain étirement de celui-ci. De plus cette face arrière semi-rigide constitue une barrière, empêchant ou tout au moins réduisant dans de grandes proportions la remontée du surplus de matière, lors de l'assemblage de deux profilés par thermosoudure, entre les extrémités libres des deux joints en vis-à-vis. La présence de la partie plane sur la face avant et des flancs inclinés avant, souples permet d'avoir une surface de contact pour l'étanchéification suffisante quelle que soit l'application ; les bords arrondis et la présence des flancs inclinés avant et arrière garantissent un aplatissement adéquat du joint lors de la compression, les flancs avant et arrière fléchissant l'un vers l'autre par rotation selon les bords arrondis. On évite ainsi les risques éventuels de pliures du joint sur lui-même . Enfin toutes ces caractéristiques permettent de disposer le joint sous forme d'un enroulement, ce qui est nécessaire pour l'alimentation du joint en sortie d'extrusion du profilé.

Le joint de l'invention est symétrique par rapport au plan passant par le milieu de ses faces avant et arrière, le décrochement de fixation étant lui-même symétrique par rapport audit plan.

De préférence pour un angle aigu (α), que fait chaque flanc incliné avant avec la partie plane de la face avant, de l'ordre de 15° à 25°, l'angle (β) interne que font entre eux les deux flancs inclinés avant et arrière est de l'ordre ou légèrement inférieur à 90°. On a ainsi, lors de la compression et aussi de l'enroulement du joint sur lui-même, un aplatissement de la face avant et un parfait repli sur lui-même du joint selon les bords arrondis qui font en quelque sorte office de charnière.

Dans un mode particulier, la partie plane de la face avant représente sensiblement un tiers de la largeur de ladite face, chacun des flancs inclinés avant représentant également environ un tiers de cette largeur, tandis que chacun des flancs inclinés arrière représente environ de un huitième à un dixième de cette largeur.

Dans ces conditions, lorsque le joint est en place sur le profilé, la surface de contact entre la face arrière et le profilé de part et d'autre de la rainure est suffisante pour minimiser les possibilités de glissement du joint dans la rainure.

Pour améliorer cette résistance au glissement, avantageusement la zone centrale de la face arrière semi-rigide est bombée, au niveau et de part et d'autre du décrochement de fixation, avec une courbure concave, tournée vers l'intérieur du joint. Cette forme bombée associée à des tolérances de cotes fonctionnelles bien précises, permet un encliquetage facile du joint sur le profilé, tout en maintenant une pression constante du joint sur la surface du profilé le long de la rainure. Cette pression qui empêche le joint de glisser, participe également à réduire le retrait du joint après la coupe du profilé.

Avantageusement s'agissant d'un joint obtenu par extrusion du même matériau thermoplastique élastomère, la semi-rigidité de la face arrière est obtenue en mettant en oeuvre sur ladite face ledit matériau ayant un indice de dureté plus élevé. De préférence, pour une épaisseur de l'ordre de 0,9 mm, la dureté de la face avant sera de l'ordre de A 65 shore tandis que celle de la face arrière d'au moins A 85 shore. Le décrochement de fixation est obtenu, lors de l'extrusion du joint dans le même matériau que celui constitutif de la face avant, ou éventuellement dans le même matériau que celui constitutif de la face arrière s'il a un indice de dureté proche de A 85 shore.

Dans une variante de réalisation, le décrochement de fixation et la zone médiane de la face arrière sur laquelle ledit décrochement est raccordé sont dans un matériau semi-rigide ayant un indice de dureté donné tandis que les zones latérales de la face arrière sont dans un matériau semi-rigide, voire rigide, d'un indice de dureté supérieur. Cette disposition particulière permet d'obtenir un effet de pression plus important tout en préservant la facilité d'enroulement sur lui-même du joint.

De préférence le décrochement de fixation est de forme tubulaire, avec une paroi de liaison s'étendant entre les deux crochets opposés de fixation. Ainsi la paroi de liaison constitue un barrage à la remontée de matière, lors de l'assemblage de deux profilés par thermosoudure.

De préférence le joint d'étanchéité selon l'invention comporte également deux bourrelets intérieurs, de part et d'autre de la partie plane de la face avant. Ces bourrelets sont destinés à servir de butées de compression et d'éviter tout risque de déchirure des bords arrondis après un usage répété du joint.

La présente invention sera mieux comprise à la lecture de la description qui va être faite de plusieurs modes de réalisation du joint d'étanchéité pour profilé en PVC destiné à la réalisation d'un cadre dormant, illustré par le dessin annexé dans lequel:
- la figure 1 est une coupe transversale d'un premier joint d'étanchéité,
- la figure 2 est une coupe transversale d'un deuxième joint d'étanchéité,
- la figure 3 est une coupe transversale du joint de la figure 2 monté sur un profilé et mis en compression,
- la figure 4 est une coupe transversale d'un troisième joint d'étanchéité ;
- et la figure 5 est une coupe transversale d'une traverse basse de fenêtre, et comportant un cadre dormant et un cadre ouvrant garni de joints d'étanchéité selon la figure 1.

Le joint d'étanchéité 1 de l'invention est un joint réalisé par extrusion d'un matériau thermoplastique élastomère. Il a une forme tubulaire de section oblongue avec une face arrière 2 qui est sensiblement plane et une face avant 3, qui se décompose en trois parties distinctes, à savoir une partie plane 5 qui est sensiblement parallèle à la face arrière 2 et deux flancs inclinées avant 6 situées de part et d'autre de la partie plane 5. La partie plane 5 est raccordée à la face arrière 2 par les flancs inclinés avant 6 deux flancs inclinés arrière 4 qui sont reliés entre eux par des bords arrondis 10.

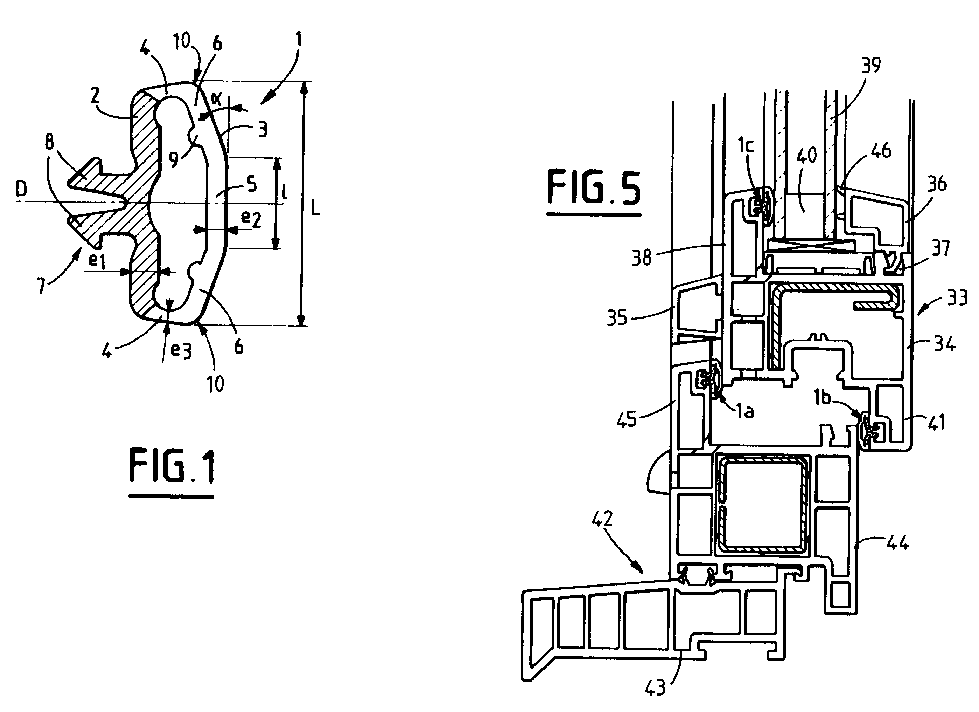

La largeur l de la partie plane 5 est au moins du quart de la largeur totale L de la face avant 3. Dans l'exemple illustré à la figure 1,l était égal au tiers de L, chaque flanc incliné avant 6 représentant également le tiers de L.

La face arrière 2 a comparativement à la face avant 3 et aux flancs inclinés arrière 4 une rigidité plus importante. Cette différence de rigidité est marquée sur la figure 1 par des hachures.

Dans un exemple précis mais non limitatif de réalisation, la face avant 3 et les flancs inclinés arrière 4 avaient un indice de dureté de A 65 shore tandis que la face arrière avait un indice de dureté de A 87 shore. Cette différence de dureté peut être obtenue lors de l'extrusion du joint en utilisant des matériaux différents bien qu'étant à base des mêmes composants.

Sur la face arrière 2 est fixé un décrochement 7 permettant la fixation du joint sur un profilé comportant une rainure spécialement adaptée à cet effet.

Dans le premier exemple ce décrochement de fixation 7 est constitué de deux éléments 8 formant crochets, séparés par un espace permettant leur rapprochement élastique. Les crochets 8 sont réalisés en même temps que le joint proprement dit lors de l'extrusion de celui-ci et sont constitués dans le même matériau et avec la même dureté que la face arrière 2, ce qui permet d'avoir un blocage très solide du joint dans la rainure du profilé.

Les épaisseurs du joint I diffèrent selon leur emplacement, à savoir que l'épaisseur e₁ de la face arrière 2 est plus importante que l'épaisseur e₂ de la face avant 1 qui est elle-même plus importante que l'épaisseur e₃ au niveau des flancs inclinés arrière 4. Le fait que cette dernière épaisseur e₃ soit sensiblement inférieure aux deux autres e₁ et e₂ permet d'améliorer la souplesse de compression lors de la mise en oeuvre du joint 1.

Le joint 1 comporte également deux bourrelets longitudinaux 9 qui sont apparents uniquement sur la paroi interne du joint et qui sont situés sur la face avant 3 dans les flancs inclinés avant 6 à proximité de la partie plane 5.

Le joint 1 représenté à la figure 1 comporte un plan de symétrie D qui est perpendiculaire aux deux faces arrières 2 et avant 3 en leur milieu.

L'inclinaison, d'angle α, entre la partie plane 5 et les flancs inclinés avant 6 de la face avant est de l'ordre de 20%.

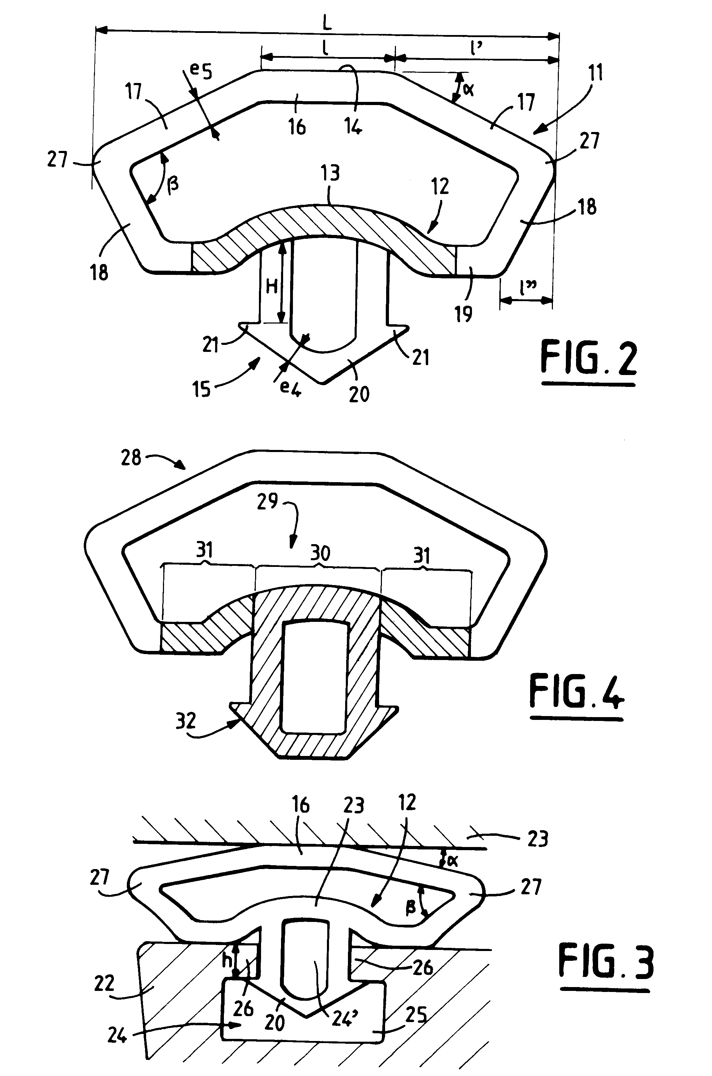

Dans un deuxième exemple de réalisation, illustré à la figure 2, le joint 11 a sa face arrière 12 qui est bombée dans sa zone centrale 13, avec une courbure concave, tournée vers la face avant 14. La face arrière 12 est semi-rigide selon cette partie bombée. Par contre le décrochement de fixation 15 a le même indice de dureté que la partie plane 16, les flancs inclinés avant 17 et arrière 18 ainsi que les extrémités latérales 19 de la face arrière. A titre indicatif la face arrière semi-rigide avait un indice de dureté de D50 shore tandis que les parties souples précitées avait un indice de dureté de A65 shore. De plus dans ce deuxième exemple, le décrochement de fixation 15 est de forme tubulaire avec une paroi de liaison 20 qui relie les deux crochets 21 de fixation. L'épaisseur moyenne e4 au niveau de ladite paroi de liaison 20 est inférieure à l'épaisseur e5 du joint 11 qui est constante dans toutes ses autres parties. L'angle β entre les deux flancs inclinés avant 17 et arrière 18 est de l'ordre de 90° ; il est dans l'exemple illustré légèrement inférieur à 90°.

Dans ce deuxième exemple, le joint 11 a une largeur totale L, qui correspond à la largeur l de la partie plane 16 et à deux fois la largeur l' prise par chaque flanc incliné avant 17. Cette même largeur totale L correspond aussi à la largeur l''' de la face arrière 12 et à deux fois la largeur l'' prise par chaque flanc incliné arrière 18. De préférence l représente sensiblement un tiers de la largeur totale L, l' représentant donc également environ un tiers de cette largeur L, et l'' représente environ un huitième à un dixième de cette même largeur totale L. Dans un exemple précis et non limitatif, les valeurs de largeur étaient les suivantes : L de 13,35 mm, l de 4 mm et l''' de 10,5 mm.

Ainsi la surface de la face arrière 12 qui est en contact avec le profilé, de part et d'autre de la rainure, est suffisante pour que les forces de frottement mises en oeuvre empêchent le glissement du joint dans la rainure.

Sur la figure 3 on a représenté le joint 11 qui vient d'être décrit fixé sur un profilé 22 et comprimé par un élément quelconque 23, et qui peut être un vitrage, un cadre ouvrant, ou un cadre dormant.

La fixation du joint 11 sur le profilé 22 est réalisée par introduction du décrochement 15 à l'intérieur de la rainure 24 formée dans ledit profilé 22 . Cette rainure 24 comporte un évidement central 25 donnant sur l'extérieur du profilé par une fente 24' délimitée par deux bords latéraux 26. Pour réaliser cette opération, il suffit d'introduire dans la fente 24' le décrochement 15, déformant la paroi de liaison 20. Cette opération étant réalisée, les deux crochets 21 reprennent élastiquement leur position et viennent en butée sur les parois intérieures des deux bords latéraux 26.

La forme concave de la zone centrale 13 de la face arrière 12 semi-rigide et la distance H entre les crochets 21 et ladite zone centrale 13 sont déterminées, pour un profilé 22 dont les bords latéraux 26 de la rainure 24 ont une épaisseur h, en sorte que lors de la mise en place automatique du joint 11 dans la rainure 24 par application dudit joint à l'aide d'un galet presseur, on obtienne une déformation d'une part du décrochement 15 permettant son introduction dans la fente 24' et d'autre part de la zone 13 bombée en sorte d'obtenir ensuite une encliquetage précis et une pression constante, par effet ressort, des parties de la face arrière en appui sur les bords latéraux 26.

Pour que cette mise en place puisse se faire, de manière automatique, en sortie d'extrusion du profilé, il est nécessaire que ledit joint 11 puisse se présenter sous la forme d'un enroulement, monté sur un axe dont la rotation est synchronisé avec l'opération d'extrusion.

La face arrière semi-rigide offre une résistance à la flexion qui est faible et qui donc autorise un tel enroulement de grande longueur sur un touret ; par exemple pour un joint de 500 mètres environ, le diamètre du noyau du touret était de 520 mm, sa largeur de 250 mm et le diamètre extérieur de l'enroulement de 800 mm.

Il est aussi à noter que, lors de la compression d'un tel joint 11, comme illustré à la figure 3, on a la garantie d'un aplatissement parfait du joint 11, sans pliure anormale, du fait que la compression entraîne simplement la diminution progressive des deux angles α et β. Dans le cas où la face arrière 12 comporte une zone bombée 23, celle-ci forme une butée pour la partie plane 16 de la face avant 14, évitant ainsi un écrasement intempestif du joint 11 au niveau des bords arrondis 27, à la jonction des deux flancs inclinés avant 17 et arrière 18, qui risquerait d'entraîner une déchirure au niveau desdits bords 27 en cas d'usage répété du joint 11, s'agissant d'un joint de frappe. Cet effet de butée est obtenu par des bourrelets 9 dans le premier exemple du joint 1.

Après la mise en place automatique et en continu du joint 11 sur le profilé 22, comme cela a été décrit précédemment, le profilé 22 garni de son joint 11 est tronçonné à longueur également de manière automatique. La semi-rigidité de la face arrière 12, empêche tout retrait du joint 11 qui pourrait se produire entre deux coupes successives. En effet l'alimentation du joint 1 étant une alimentation positive, il s'exerce obligatoirement sur celui-ci une certaine tension qui entraînerait un allongement préjudiciable, si celui-ci ne comportait pas de partie semi-rigide. Cet allongement entre deux coupes successives, se traduirait par un retrait du joint se manifestant alors par une absence de joint au niveau des angles lors de l'assemblage des profilés.

Le fait que la face arrière 12 soit semi-rigide présente un autre avantage, qui est d'améliorer sensiblement la présentation de la soudure lors de l'assemblage de deux profilés par thermosoudure ; on sait que pour réaliser cet assemblage on chauffe la matière selon les extrémités des deux profilés à assembler jusqu'à ramollissement de ladite matière, on applique ensuite l'une contre l'autre les deux extrémités et on laisse refroidir. Dans cette thermosoudure, la matière chauffée forme des bourrelets débordant de la surface du profilé. Dans le cas présent, la face arrière 12 semi-rigide forme un barrage à la remontée de cette matière. Cet effet est encore amélioré dans le cas où le décrochement de fixation 15 est de forme tubulaire.

Le troisième exemple de joint 28, illustré à la figure 4, diffère par rapport au deuxième exemple de joint 11 par les caractéristiques de dureté de la face arrière et du décrochement de fixation. Plus précisément, la face arrière 29 est semi-rigide avec un premier niveau de dureté dans la zone médiane 30 et un second niveau de dureté dans les zones latérales 31 , le décrochement de fixation 32 ayant le même indice de dureté que celui de la face arrière 29 dans la zone médiane 30. De plus le premier niveau de dureté correspond à un indice de dureté inférieur à celui du second niveau de dureté . A titre indicatif, le premier niveau de dureté correspond à un niveau de A 86 shore, tandis que le second correspond à un indice de D 70.

Cette disposition particulière permet d'optimiser les effets de la semi-rigidité de la face arrière tout en permettant un enroulement sur lui-même du joint 28.

Sur la figure 5 on a représenté un ensemble de profilés en PVC constituant la partie basse d'une fenêtre.

S'agissant du cadre ouvrant 33 de la fenêtre, il est composé d'un premier profilé 34 constituant la traverse proprement dite de la fenêtre sur lequel est rapporté un premier profilé 35 constituant un rejet d'eau et un second profilé 36 constituant une parclose. La parclose 36 est montée, par encliquetage dans une rainure 37 de la traverse 34, en vis-à-vis de la joue 38 bordant la feuillure aménagée dans ladite traverse 34 pour recevoir le vitrage isolant 39, qui dans l'exemple illustré est un double vitrage avec intercalaire 40.

Une seconde joue 41 borde la feuillure extérieure de la traverse 34.

On a également représenté sur la figure 5 le cadre dormant 42 de la fenêtre, avec un profilé 43 formant pièce d'appui de fenêtre et un second profilé 44 constituant le dormant proprement dit. Ce dormant comporte une joue 45 bordant la feuillure qui reçoit la partie ouvrante, c'est à dire le profilé 34 formant traverse.

Cette partie basse de la fenêtre comporte trois joints 1 selon l'invention. Le premier joint 1a est monté dans une rainure pratiquée dans la partie interne de la joue 45 du profilé 44 constituant le dormant proprement dit.

Le second joint 1b est fixé dans une rainure pratiquée dans la partie interne de la joue 41 du profilé 34 formant traverse.

Le troisième joint 1c est fixé dans une rainure pratiquée dans la partie interne de la joue 38, en vis-à-vis de la parclose 36.

Les deux premiers joints 1a et 1d sont des joints de frappe, qui sont amenés à réaliser l'étanchéité entre le dormant 44 et la traverse 34 de l'ouvrant. Ces deux joints de frappe 1a et 1b sont comprimés uniquement sur une partie de leur largeur, par la face de la pièce en regard qui vient s'appliquer au moins sur la partie plane 5 de la face avant 3 du joint.

Le joint de vitrage 1c est comprimé une fois pour toute lors de la mise en place du vitrage 39 et son blocage par la parclose 36 s'encliquetant dans la rainure 37 de la traverse 34. Le vitrage 39 n'est pas en contact direct avec le profilé 34 formant traverse mais s'applique uniquement sur le joint de vitre 1c et sur le joint 46, de la parclose 36, qui en l'occurrence est un joint polychlorure de vinyle extrudé lors de la fabrication de ladite parclose 36.

En position normale d'utilisation, les joints 1 selon l'invention subissent une compression nominale de 35 % environ pour une utilisation en joint de frappe, 1a, 1b et de 50 % pour une utilisation en joint de vitrage 1c.

Le même profilé 44 constituant le dormant peut tout aussi bien accueillir un vitrage fixe, au lieu du cadre ouvrant 33 comme cela vient d'être illustré. Grâce au joint de l'invention, qui peut constituer à la fois un joint de vitrage et un joint de frappe, il est possible de stocker ledit profilé 44 garni de son joint 1a .

On comprend que s'agissant d'un profilé tel que le profilé 34 formant traverse, il est possible d'insérer simultanément lors de l'opération d'extrusion le joint de vitrage 1c et le joint de frappe 1b . L'un des avantages de l'invention est donc de réduire les références de joints en stock chez l'extrudeur et par conséquent d'éliminer complètement l'opération de pose manuelle chez les menuisiers assembleurs de profilés.

Il est rappelé que les indices de dureté exprimés en unité shore sont mesurés conformément au test I.R.H.D. (International Rubber Hardness Degre) et qu'il existe plusieurs échelles de valeur ; parmi lesquelles l'échelle de shore A correspond à des matériaux plus souples, moins rigides que ceux de l'échelle D. Ces deux échelles ne se recoupent que partiellement. Par exemple l'indice 65 shore A n'a pas d'équivalent sur l'échelle D ; l'indice 85 shore A correspond à environ 35 shore D ; l'indice 70 shore D n'a pas d'équivalent dans l'échelle A.

## Revendications

1. Joint d'étanchéité en thermoplastique élastomère pour profilé extrudé, qui comporte un décrochement permettant sa fixation dans une rainure pratiquée dans ledit profilé, ledit joint étant du type tubulaire, ayant une forme oblongue avec une face arrière sensiblement plane supportant le décrochement de fixation et une face avant qui comporte une partie plane parallèle à la face arrière, sur au moins le quart de sa largeur, caractérisé en ce que la partie plane (5, 14) de la face avant (3, 14) est raccordée à la face arrière (2, 12) par des flancs inclinés avant (6, 17) et des flancs inclinés arrière (4, 18) reliés par des bords arrondis (10, 27) et en ce que la face arrière (2, 12) est semi-rigide, les flancs inclinés et la partie plane de la face avant étant souples.

2. Joint selon la revendication 1 caractérisé en ce que, pour un angle aigu (α), que fait chaque flanc incliné avant (6, 17) avec la partie plane (5, 16) de la face avant (3, 14), de l'ordre de 15° à 25°, l'angle (β) interne que font entre eux les deux flancs inclinés avant (6, 17) et arrière (4, 18) est de l'ordre ou légèrement inférieur à 90°.

3. Joint selon l'une des revendications 1 ou 2 caractérisé en ce que la partie plane (16) de la face avant (14) représente sensiblement un tiers de la largeur (L) de ladite face (14) , chacun des flancs inclinés avant (17) représentant également environ un tiers de cette largeur (L), tandis que chacun des flancs inclinés arrière (18) représente environ de un huitième à un dixième de cette largeur (L).

4. Joint selon l'une des revendications 1 à 3 caractérisé en ce que la zone centrale (13) de la face arrière (12) semi-rigide est bombée, au niveau et de part et d'autre du décrochement de fixation (15), avec une courbure concave, tournée vers l'intérieur du joint.

5. Joint selon l'une des revendications 1 à 4 caractérisé en ce que s'agissant d'un joint obtenu par extrusion du même matériau thermoplastique élastomère, la semi-rigidité de la face arrière est obtenue en mettant en oeuvre sur ladite face ledit matériau ayant un indice de dureté plus élevé.

6. Joint selon la revendication 5 caractérisé en ce que pour une épaisseur de l'ordre de 0,9 mm, l'indice de dureté de la face avant est de l'ordre de A 65 shore tandis que celui de la face arrière d'au moins A 85 shore.

7. Joint selon l'une des revendications 5 ou 6 caractérisé en ce que le décrochement de fixation (15) est obtenu, lors de l'extrusion du joint dans le même matériau que celui constitutif de la face avant, ou éventuellement dans le même matériau que celui constitutif de la face arrière s'il a un indice de dureté proche de A 85 shore.

8. Joint selon la revendication 7 caractérise en ce que le décrochement de fixation (32) et la zone médiane (30) de la face arrière (29) sur laquelle ledit décrochement (32) est raccordé sont dans un matériau semi-rigide ayant un indice de dureté donné tandis que les zones latérales (31) de la face arrière (29) sont dans un matériau semi-rigide, voire rigide, d'un indice de dureté supérieur.

9. Joint selon la revendication 1 caractérisé en ce que le décrochement de fixation (15) est de forme tubulaire, avec une paroi de liaison (20) s'étendant entre les deux crochets (21) opposés de fixation.

10. Joint selon la revendication 1 caractérisé en ce qu'il comporte également deux bourrelets intérieurs (9), de part et d'autre de la partie plane (5) de la face avant (3).
